# FASCICULE DE BREVET EUROPEEN

(11) **EP 0 613 930 B1**
(45) Date de publication et mention de la délivrance du brevet: **28.01.1998**
(21) Numéro de dépôt: 94400383.9
(22) Date de dépôt: 23.02.1994
(51) Int. Cl.: C09C 1/00, C01B 13/36, C01G 3/00, C01G 51/00, C01G 53/00

(54) **Nouveaux pigments mineraux colorés à base de terres rares, procédé de synthèse et utilisations**
Neue farbige Mineralpigmente auf der Basis von seltenen Erden, Verfahren zur Herstellung und Verwendung
New colored mineral pigments on the basis of rare earths, process for their synthesis and use

(30) Priorité: 03.03.1993 FR 9302469
(43) Date de publication de la demande: 07.09.1994
(73) Titulaire: RHONE-POULENC CHIMIE, 92408 Courbevoie Cédex (FR)
(72) Inventeur: Chopin Thierry, F-93200 Saint-Denis (FR); Macaudiere, Pierre, F-92600 Asnières-sur-Seine (FR)
(74) Mandataire: Dubruc, Philippe

(56) Documents cités:
- EP-A- 0 309 322
- WO-A-89/02871
- WO-A-89/08335
- CHEMICAL ABSTRACTS, vol. 117, no. 14, 5 Octobre 1992, Columbus, Ohio, US; abstract no. 142201z, page 785 ; & JOURNAL OF SOLID STATE CHEMISTRY vol. 99, no. 1 , 1992 pages 63 - 71
- CHEMICAL ABSTRACTS, vol. 116, no. 26, 29 Juin 1992, Columbus, Ohio, US; abstract no. 266127d, page 745 ; & MATER. CHEM.PHYS. vol. 31, no. 1-2 , 1992 pages 145 - 149
- MATERIALS RESEARCH BULLETIN. vol. 24, no. 7 , Juillet 1989 , ELMSFORD NY,US pages 867 - 874 JIN-HO CHOY

## Description

La présente invention concerne, à titre de produits industriels nouveaux et utiles, des pigments inorganiques colorés à base de terres rares.
Elle concerne plus particulièrement encore de nouveaux pigments minéraux à base essentiellement d'oxydes mixtes de terres rares et d'éléments métalliques divalents, présentant d'une part de très bonnes caractéristiques chromatiques, en particulier une coloration verte remarquable, et d'autre part l'avantage d'une absence et/ou quasi-absence de toxicité.
L'invention concerne également un procédé pour l'obtention de tels pigments, ainsi que certaines des utilisations possibles de ces derniers pour la coloration de divers matériaux.

Les pigments minéraux de coloration sont déjà largement utilisés dans de nombreuses industries notamment dans celles des peintures, des matières plastiques et des céramiques. Dans de telles applications, les propriétés que sont, entre autres, la stabilité thermique et/ou chimique, la dispersabilité (aptitude du produit à se disperser correctement dans un milieu donné), la couleur intrinsèque, le pouvoir de coloration et le pouvoir opacifiant, constituent autant de critères particulièrement importants à prendre en considération dans le choix d'un pigment convenable.

Malheureusement, le problème est que la plupart des pigments minéraux qui conviennent pour des applications telles que ci-dessus et qui sont effectivement utilisés à ce jour à l'échelle industrielle, font généralement appel à des métaux (cadmium, plomb, chrome, cobalt notamment) dont l'emploi devient de plus en plus sévèrement réglementé, voire interdit, par les législations de nombreux pays, compte tenu en effet de leur toxicité réputée très élevée. On peut ainsi plus particulièrement citer, à titre d'exemples non limitatifs, le cas des pigments rouges à base de sélénure de cadmium et/ou de sulfosélénure de cadmium, et pour lesquels des substituts à base de sulfures de terres rares sont déjà maintenant proposés, ainsi que celui des pigments verts qui présentent quant à eux pour inconvénient de contenir le plus souvent du chrome sous la forme notamment de chromite de cobalt, de Victoria Green (grenats à base de chrome) ou d'oxyde de chrome III.

On connait par ailleurs par la demande de brevet WO 89/08335 la préparation par chamottage et frittage de matériaux supraconducteurs dans la composition desquels rentrent des substrats de type Y₂BaCuO₅. Il s'agit là, pour ces matériaux, d'une application différente de l'utilisation comme pigments. Ces matériaux sont en outre massiques et, de ce fait, ne peuvent pas être utilisés comme pigments colorants.

L'article des Chemical Abstracts, n° 117:142201z, Vol.117, 1992 p.785 décrit des produits du type Tm₂BaNiO₅. Ce produit est obtenu par chamottage à partir d'oxydes de la terre rare et du nickel et de carbonate de baryum. Cette voie ne conduit pas à des produits de constitution et de granulométrie aptes à leur utilisation comme pigments colorants.

L'article du Material Research Bulletin Vol. 24, pp. 867-874, 1989, concerne la préparation d'un supraconducteur YBa₂Cu₃O₇. Ce supraconducteur est obtenu par chamottage. De ce fait, le produit ainsi préparé ne peut pas présenter des caractéristiques de constitution et de granulométrie adéquates pour une utilisation comme pigment.

On voit donc que la recherche, le développement et finalement la mise à disposition de nouveaux pigments minéraux de substitution constituent à ce jour un enjeu économique et industriel des plus importants.

La présente invention s'inscrit justement dans le cadre de cet enjeu.

Plus précisément encore, la présente invention vise à proposer une nouvelle famille de pigments inorganiques, en particulier à coloration verte, ne contenant pas d'éléments réputés pour leur toxicité élevée, stables thermiquement et chimiquement, et convenant pour la coloration de nombreux matériaux.

Elle vise également à proposer un procédé permettant d'accéder sur une échelle industrielle, de manière simple, économique, reproductible et contrôlée , à cette nouvelle famille de pigments.

A ces fins, il a maintenant été trouvé, et c'est ce qui constitue l'un des objets de la présente invention, de nouveaux pigments inorganiques colorés, lesdits pigments étant caractérisés par le fait qu'ils comprennent au moins un oxyde mixte de formule R₂MₓM'_{y}O₅ dans laquelle R désigne au moins un élément pris dans le groupe constitué par l'yttrium et les terres rares de numéros atomiques compris inclusivement entre 62 et 71, M et M' sont identiques ou différents et représentent au moins un élément choisi au sein des éléments métalliques présentant au moins un état de valence +2, et x et y sont deux nombres, de préférence entiers, dont la somme x+y doit être égale à 2, cet oxyde mixte étant autre que Y₂Cu₂O₅; et en ce qu'ils sont constitués d'agglomérats de taille comprise entre 2 et 25 µm.

Selon une autre variante de l'invention, les pigments colorés sont caractérisés en ce qu'ils comprennent au moins un oxyde mixte de formule :

R₂MₓM'_{y}O₅

dans laquelle R représente au moins un élément pris dans le groupe constitué par l'yttrium et les terres rares de numéros atomiques compris inclusivement entre 62 et 71, M et M' représentent des éléments choisis, identiques ou différents, au sein des éléments métalliques présentant au moins un état de valence +2, et x et y sont deux nombres, de préférence entiers, dont la somme x+y est égale à 2, cet oxyde mixte étant autre que Y₂Cu₂O₅; et en ce qu'ils sont constitués de grains de taille comprise entre 0,2 et 5 µm, ces grains pouvant être issus de la désagglomération d'agglomérats constitués desdits grains.

L'invention couvre aussi l'utilisation pour la coloration de matériaux les pigments tels que définis ci-dessus. La Demanderesse a trouvé en effet que les oxydes mixtes ci-dessus pouvaient être utilisés avec succès en tant que pigments colorés en raison de leurs nombreuses propriétés avantageuses, telles que notamment une stabilité thermique à des températures allant jusqu'à 1500°C, une bonne stabilité chimique dans des milieux comme l'eau (à pH neutre, basique ou faiblement acide) et les solvants organiques, un large éventail de couleurs intrinsèques à dominantes vertes, un très bon pouvoir de coloration, un très bon pouvoir opacifiant et une très bonne dispersabilité notamment dans les plastiques et les céramiques.

Le procédé de synthèse des pigments selon l'invention constitue un second objet de la présente invention, et il se caractérise par le fait qu'il comprend les étapes essentielles suivantes :
(i) on prépare un mélange contenant, en solution et dans les proportions stoechiométriques requises, des sels solubles de tous éléments (R, M et M') rentrant dans la composition de l'oxyde mixte désiré,
(ii) on sèche le mélange obtenu,
(iii) on calcine le produit séché,
(iv) et enfin, éventuellement, on procède à un broyage et/ou une désagglomération du produit calciné.

Le procédé selon l'invention permet d'aboutir, directement après l'étape de calcination, à des produits qui, entre autres caractéristiques, présentent une excellente pureté phasique, une très bonne homogénéité chimique notamment au niveau de l'ajustement à la stoechiométrie désirée, et une granulométrie fine et régulière. L'étape de broyage permet, quant à elle et en cas de besoin, d'amener et de contrôler la granulométrie des poudres à des valeurs convenant à des applications particulières.

Mais d'autres caractéristiques, aspects et avantages de l'invention apparaîtront encore plus clairement à la lecture de la description détaillée qui va suivre, ainsi que des divers exemples destinés à l'illustrer de manière concrète mais non limitative.

Comme indiqué précédemment dans la description, les pigments selon l'invention sont à base d'oxydes mixtes répondant à la formule générale

R₂MₓM'_{y} O₅

dans laquelle R, M, M', x et y ont la signification donnée ci-avant.

De préférence, x et y représentent deux nombres entiers.
Dans ce dernier cas, et compte tenu alors du nombre limité de valeurs discrètes susceptibles d'être prises par les variables x et y (0 ou 1), et de la condition supplémentaire imposée à la somme arithmétique de ces dernières (x+y=2), les oxydes mixtes préférés selon l'invention correspondent à des composés de type définis dont la stoechiométrie peut donc être en 2-1-1-5 (oxydes mixtes ternaires) ou en 2-2-5 (oxydes mixtes binaires). Leur structure peut être facilement et clairement identifiée par des analyses du type diffraction aux rayons X.

Les éléments terres rares sont, selon l'invention, choisis, seuls ou en mélanges, au sein du groupe constitué par l'yttrium et les terres rares lourdes de numéros atomiques compris, inclusivement, entre 62 et 71, à savoir le samarium, l'europium, le gadolinium, le terbium, le dysprosium, l'holmium, l'erbium, le thulium, l'ytterbium et le lutécium.

L'élément terre rare préféré pour les pigments selon l'invention est l'yttrium.

Les éléments M et M' sont, quant à eux, choisis au sein des éléments métalliques possédant au moins un état de valence +2. A titre d'exemple de tels éléments, on peut plus particulièrement citer les éléments alcalino-terreux tels que notamment le magnésium, le calcium, le strontium et de préférence le baryum; le nickel; le cuivre; le zinc; le cobalt; les métaux précieux tels que notamment le platine et le palladium.
Parmi tous les éléments métalliques présentant au moins une bivalence et susceptibles donc de convenir dans la présente invention, on préfère mettre en oeuvre ceux ne présentant pas de toxicité officiellement reconnue pour l'homme et/ou son environnement, comme par exemple les éléments alcalino-terreux, et plus particulièrement le baryum.

On notera que les pigments préférés selon la présente invention sont ceux qui sont à base d'oxydes mixtes répondant à la formule Y₂BaCuO₅ et/ou Y₂Cu₂O₅.

Tous les pigments selon l'invention présentent pour caractéristique commune de posséder une couleur intrinsèque à dominante dans le vert.
Selon la nature de la ou des terres rares choisies et/ou des cations métalliques divalents mis en jeu, on peut, après de simples essais de routine, accéder à toute une gamme de couleurs vertes présentant des nuances différentes , ce qui ajoute bien entendu à l'intérêt des pigments selon la présente invention. On peut ainsi notamment disposer de pigments allant d'un vert profond à un vert tirant soit sur le bleu soit sur le jaune.

A titre d'exemples de couleurs auxquelles il est possible d'aboutir avec les pigments selon l'invention, et ceci à titre purement illustratif et nullement limitatif, on peut noter ici qu'à l'oxyde mixte de formule Y₂BaCuO₅ correspond un vert tirant légèrement sur le jaune; à l'oxyde mixte de formule Y₂Cu₂O₅ correspond un vert tirant sur le bleu; et à l'oxyde mixte de formule Yb₂BaCuO₅ correspond un vert assez foncé.

La coloration intrinsèque des pigments selon l'invention peut par ailleurs être quantifiée au moyen des coordonnées chromatiques L*, a* et b* données dans le système CIE 1976 (L*, a*, b*) tel que défini par la Commission Internationale d'Eclairage et répertorié dans le Recueil des Normes Françaises (AFNOR), couleur colorimétrique n° X08-12 (1983). Elles sont déterminées au moyen d'un colorimètre commercialisé par la Société Pacific Scientific. La nature de l'illuminant est D65. La surface d'observation est une pastille circulaire de 12,5 cm² de surface. Les conditions d'observations correspondent à une vision sous un angle d'ouverture de 10°. Dans les mesures données, la composante spéculaire est exclue.

L* donne une mesure de la réflectance (nuance clair/sombre) et varie ainsi de 100 (blanc) à 0 (noir).

a* et b* sont les valeurs des tendances colorées :
a* positif = rouge
a* négatif = vert

b* positif = jaune
b* négatif = bleu

L* représente donc la variation du noir au blanc, a* la variation du vert au rouge et b* la variation du jaune au bleu.

Ainsi, selon la présente invention, et notamment dans le cas particulier où l'oxyde mixte répond à la formule Y₂BaCu0₅, on peut disposer de pigments présentant les coordonnées chromatiques tout à fait remarquables suivantes :
- L* au moins égal à 30, de préférence au moins égal à 40 et de préférence encore au moins égal à 50,
- a* inférieur à -20, de préférence inférieur à -30, et de préférence encore inférieur à -40,
- b* compris généralement entre 0 et 30, de préférence compris entre 10 et 20.

De telles coordonnées, et en particulier la coordonnée chromatique a*, correspondent à une couleur verte intense tout à fait exceptionnelle, équivalente voire supérieure à celle des pigments verts de référence, comme par exemple l'oxyde de chrome. En outre, l'un des avantages des pigments selon l'invention est qu'ils ne présentent pas les problèmes de toxicité liés à la présence des métaux lourds, comme cela est généralement le cas dans les pigments de l'art antérieur.

Dans le cas particulier où l'oxyde mixte répond à la formule Y2Cu2O5, le pigment selon l'invention présente des coordonnées chromatiques L* et a* ayant des valeurs dans le même domaine que celui qui vient d'être décrit pour Y₂BaCu0₅ et une coordonnée b* strictement inférieure à 0.

Comme indiqué précédemment, l'invention a également pour objet un procédé de fabrication industriel permettant d'accéder aux nouveaux pigments selon l'invention.

Ce procédé consiste, dans sa première étape, à tout d'abord préparer un mélange à base de sels solubles des éléments R, M et M'.

D'un point de vue pratique, selon l'invention, on utilise de préférence des sels solubles en milieu aqueux, et ceci de telle sorte que le mélange final obtenu soit un mélange lui-même aqueux. Bien entendu, la mise en oeuvre d'un mélange en phase liquide organique n'est pas exclue, mais simplement plus compliquée.

A titre de sels solubles en milieu aqueux et convenant pour la présente invention, on peut plus particulièrement citer les nitrates, les halogénures, et notamment les chlorures, les acétates et les sulfates. De préférence, on opère avec des nitrates.

Le choix des éléments R, M et M' au sein des familles ci-avant définies se fait bien entendu en fonction de la composition du pigment que l'on désire obtenir.

De même, les quantités et proportions de sels de ces éléments à mettre en oeuvre dans le procédé selon l'invention sont ajustées de manière classique pour avoir dans le mélange un rapport molaire terre(s) rare(s) / métal (aux) divalent(s) qui corresponde à la stoechiométrie du produit final désiré, à savoir de préférence 2/1/1 (oxyde mixte ternaire défini) ou 2/2 (oxyde mixte binaire défini). Dans certains cas, il peut s'avérer nécessaire de porter et maintenir le mélange à une température qui soit suffisante pour que les sels restent à l'état soluble dans celui-ci; ceci est en particulier vrai lorsque l'on travaille par exemple avec des sels de baryum, en particulier le nitrate de baryum.

Le mélange initial étant ainsi obtenu, on procède ensuite, conformément à la deuxième étape du procédé selon l'invention, à son séchage.

Ce séchage peut être réalisé par tout moyen connu en soi, par exemple par séchage dans une étuve ou dans un four.
Toutefois, selon la présente invention, on préfère mettre en oeuvre un séchage par atomisation, c'est à dire par pulvérisation du mélange initial (aqueux ou organique, mais de préférence aqueux) de sels dans une atmosphère chaude (spray-drying).

L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin- London).

Selon un mode particulièrement préféré de mise en oeuvre du procédé selon l'invention, on réalise un séchage par atomisation dans un réacteur "Flash", par exemple du type mis au point par la Demanderesse et décrit notamment dans les demandes de brevet français n° 2 257 326, 2 419 754 et 2 431 321. Dans un tel procédé d'atomisation-séchage, les gaz traitants (gaz chauds) sont animés d'un mouvement hélicoïdal et s'écoulent dans un puits-tourbillon. Le mélange à sécher est alors injecté suivant une trajectoire confondue avec l'axe de symétrie des trajectoires hélicoïdales desdits gaz, ce qui permet de transférer parfaitement la quantité de mouvement des gaz au mélange à traiter. Les gaz chauds assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds. Selon les débits respectifs des gaz et de la solution, la température d'entrée des gaz peut être alors comprise entre 400 et 600°C, et la température de sortie desdits gaz (qui est également la température de sortie du solide séché) est généralement comprise entre 100 et 300°C.

D'une manière générale, la température de l'atmosphère de séchage peut varier dans de larges limites, et elle dépend notamment du temps de séjour moyen que l'on désire ou que l'on peut imposer au produit atomisé une fois dans ladite atmosphère. Dans la pratique, les conditions du séchage (température et/ou temps de séjour) sont déterminées classiquement de manière à au moins obtenir une élimination totale ou quasi-totale de l'eau résiduelle contenue dans le produit, c'est à dire, globalement, jusqu'à l'obtention d'un poids constant pour ce dernier.

Dans une dernière étape du procédé selon l'invention, le produit récupéré après séchage doit enfin être calciné.

Cette calcination est conduite à une température et pendant un temps suffisants pour obtenir la formation complète de l'oxyde mixte désiré, ce temps étant généralement d'autant plus court que la température est élevée. Cette température dépend en outre bien entendu de l'oxyde mixte considéré, de sorte qu'il est assez difficile d'énoncer de règle générale sur ce sujet. Le taux de formation en oxyde mixte peut être suivi, par exemple, au moyen de simples analyses en diffraction X conduites à différents stade de la calcination.

L'étape de calcination est généralement opérée sous air, mais une calcination menée par exemple sous gaz inerte n'est bien évidement pas exclue.

D'une manière pratique, on calcine le produit séché à une température d'au moins 900 °C, et de préférence d'au moins 1000 °C.

A l'issue de cette étape, on obtient un produit présentant une très bonne pureté phasique et une très bonne couleur intrinsèque exprimée dans le système L, a*, b*.

En outre, le produit est constitué d'agglomérats, eux-mêmes constitués de grains ou d'agrégats, la taille moyenne de ces agglomérats se situe généralement entre 2 et 25 µm. Avec une telle granulométrie, le produit est directement utilisable comme pigment, notamment pour matières céramiques et plastiques. Cette granulométrie est essentiellement contrôlée par la température et/ou le temps de calcination. On notera que ces derniers paramètres influent aussi généralement sur les coordonnées trichromatiques L*, a*, b* du pigment obtenu.

Le produit de l'invention peut être facilement broyé ou désaggloméré si nécessaire, en particulier pour la coloration des plastiques. Le broyage et/ou la désagglomération des agrégats du produit est réalisé de manière à amener la granulométrie moyenne des particules (grains) qui constitue le produit à une valeur comprise entre 0,2 et 5 µm, et de préférence inférieure à 2 µm.

A cet effet, des opérations de broyage/désagglomération conduites au moyen d'appareils type broyeur à jet d'air conviennent tout à fait bien.

Les pigments selon l'invention possèdent un très bon pouvoir de coloration et un très bon pouvoir opacifiant, et, de ce fait, conviennent à la coloration de nombreux matériaux, tels que plastiques, peintures et céramiques. A cet égard, la polyvalence des pigments selon l'invention constitue l'un de leurs grands atouts.

Ainsi, et plus précisément encore, ils peuvent être utilisés dans la coloration de matières plastiques qui peuvent être du type thermoplastiques ou thermodurcissables.
Comme résines thermoplastiques susceptibles d'être colorées selon l'invention, on peut citer, à titre purement illustratif, le chlorure de polyvinyle, l'alcool polyvinylique, le polystyrène, les copolymères styrène-butadiène, styrène-acrylonitrile, acrylonitrile-butadiène-styrène (A.B.S.), les polymères acryliques notamment le polyméthacrylate de méthyle, les polyoléfines telles que le polyéthylène, le polypropylène, le polybutène, le polyméthylpentène, les dérivés cellulosiques tels que par exemple l'acétate de cellulose, l'acéto-butyrate de cellulose, l'éthylcéllulose, les polyamides dont le polyamide 6-6.

Concernant les résines thermodurcissables pour lesquelles les pigments selon l'invention conviennent également, on peut citer, par exemple, les phénoplastes, les aminoplastes notamment les copolymères urée-formol, mélamine-formol, les résines époxy et les polyesters thermodurcissables.

On peut également mettre en oeuvre les pigments de l'invention dans des polymères spéciaux tels que des polymères fluorés en particulier le polytétrafluoréthylène (P.T.F.E.), les polycarbonates, les élastomères silicones, les polyimides.

Dans cette application spécifique pour la coloration des plastiques, on peut mettre en oeuvre les pigments de l'invention directement sous forme de poudres. On peut également, de préférence, les mettre en oeuvre sous une forme pré-dispersée, par exemple en prémélange avec une partie de la résine, sous forme d'un concentré pâte ou d'un liquide ce qui permet de les introduire à n'importe quel stade de la fabrication de la résine. Ce dernier point constitue un avantage particulièrement important des pigments selon l'invention.

Ainsi, les pigments selon l'invention peuvent être incorporés dans des matières plastiques telles que celles mentionnées ci-avant dans une proportion pondérale allant généralement soit de 0,01 à 5% (ramenée au produit final) soit de 40 à 70% dans le cas d'un concentré.

Les pigments de l'invention peuvent être également utilisés dans le domaine des peintures et lasures et plus particulièrement dans les résines suivantes : résines alkydes dont la plus courante est dénommée glycérophtalique; les résines modifiées à l'huile longue ou courte; les résines acryliques dérivées des esters de l'acide acrylique (méthylique ou éthylique) et méthacrylique éventuellement copolymérisés avec l'acrylate d'éthyle, d'éthyl-2 hexyle ou de butyle; les résines vinyliques comme par exemple l'acétate de polyvinyle, le chlorure de polyvinyle, le butyralpolyvinylique, le formalpolyvinylique, et les copolymères chlorure de vinyle et acétate de vinyle ou chlorure de vinylidène; les résines aminoplastes ou phénoliques le plus souvent modifiées; les résines polyesters; les résines polyuréthannes; les résines époxy; les résines silicones.
Généralement, les pigments sont mis en oeuvre à raison de 5 à 30% en poids de la peinture, et de 0,1 à 5% en poids du lasure.

Les pigments de l'invention conviennent également pour la coloration des matières céramiques, comme par exemple les porcelaines, les faïences et les grès, et ceci soit par coloration à coeur de la céramique (mélange physique entre la poudre céramique et le pigment), soit par coloration uniquement de la surface de cette dernière au moyen de glaçures (compositions verrières de revêtement) contenant le pigment.
Dans cette application, la quantité de pigments mise en oeuvre est généralement comprise entre 1 et 30% en poids par rapport soit à l'ensemble de la céramique, soit par rapport à la glaçure seule.

Enfin, les pigments selon l'invention sont également susceptibles de convenir pour des applications dans l'industrie du caoutchouc, notamment dans les revêtements pour sols, dans l'industrie du papier et des encres d'imprimerie, dans le domaine de la cosmétique, ainsi que nombreuses autres utilisations comme par exemple, et non limitativement, le finissage des cuirs et les revêtements stratifiés pour cuisines et autres plans de travail.

Des exemples concrets illustrant l'invention vont maintenant être donnés. Ces exemples illustrent tant la synthèse et la caractérisation de certains des pigments selon l'invention, que l'utilisation de ces derniers pour une de leurs applications possibles dans le domaine de la coloration des matières plastiques.

### Exemple 1

Cet exemple illustre l'invention dans le cadre de la synthèse d'un pigment à base de l'oxyde mixte **Y**_{**2**}**BaCuO**_{**5**}.

On mélange dans un bêcher :
- 300 ml d'une solution de nitrate d'yttrium 1,33 M
- 200 ml d'une solution de nitrate de cuivre 1,0 M
- 52,3 g de nitrate de baryum.

On ajoute ensuite de l'eau de manière à obtenir 800 ml de mélange.

Le mélange est ensuite chauffé, sous agitation, pour solubiliser parfaitement le nitrate de baryum et rendre ainsi la solution homogène.

Cette solution est alors séchée par atomisation (atomiseur Büchi).

On recueille ainsi une poudre qui est ensuite calcinée sous air pendant 3 heures à 950°C.

Le produit calciné est une poudre verte, phasiquement pure et correspondant à la phase Y₂BaCuO₅, et dont les caractéristiques sont les suivantes :
- granulométrie moyenne (CILAS) :
   Φ₅₀ = 2,2 µm
   indice de dispersion I = 0,8
   (I= σ/m = (Φ₈₄ - Φ₁₆)/2Φ₅₀
- coordonnées chromatiques :
   L* = 67,5
   a* = -30
   b* = 18

Le spectre de diffraction aux rayons X du produit calciné est donné à la figure 1.

### Exemple 2

On reproduit à l'identique l'exemple 1 ci-dessus, à cette différence près que l'étape de calcination se fait ici pendant 8 heures à 1000°C.

On obtient alors une poudre verte dont les caractéristiques sont les suivantes :
- granulométrie :
   Φ₅₀ = 3 µm
   I = 0,6
- coordonnées chromatiques :
   L* = 60,4
   a* = -39,3
   b* = 20,9

### Exemple 3

On reproduit à l'identique l'exemple 1 ci-dessus, à cette différence près que l'étape de calcination se fait ici pendant 3 heures à 1160°C.

On obtient alors une poudre verte dont les caractéristiques sont les suivantes :
- granulométrie :
   Φ₅₀ = 5,2 µm
   I = 0,5
- coordonnées chromatiques :
   L* = 52
   a* = -40
   b* = 20

### Exemple 4

Cet exemple illustre l'invention dans le cadre de la synthèse d'un pigment à base de l'oxyde mixte **Sm**_{**2**}**BaCuO**_{**5**}**.**

On mélange dans un bêcher:
- 494 ml d'une solution de nitrate de samarium 0,81 M
- 200 ml d'une solution de nitrate de cuivre 1,0 M
- 52,3 g de nitrate de baryum.

On procède ensuite comme à l'exemple 1 ci-dessus (dilution à 800 ml, chauffage, séchage par atomisation Büchi), à cette différence près que le produit récupéré après séchage est ici calciné 3 heures à 1160°C.

Après calcination, on récupère une poudre verte, phasiquement pure, dont les caractéristiques sont les suivantes :
- identification aux rayons X : phase Sm₂BaCuO₅
- granulométrie moyenne (CILAS) :
   Φ₅₀ = 4,8 µm
   I = 0,62
- coordonnées chromatiques :
   L* = 30,5
   a* = -11,3
   b* = 5,9

### Exemple 5

Cet exemple illustre l'invention dans le cadre de la synthèse d'un pigment à base de l'oxyde mixte **Yb**_{**2**}**BaCuO**_{**5**}.

On mélange dans un bêcher :
- 161 ml d'une solution de nitrate d'ytterbium 1,86 M
- 36,24 g de nitrate de cuivre trihydraté
- 39,22 g de nitrate de baryum.

Le mélange ainsi obtenu est ensuite chauffé, sous agitation, sur une plaque chauffante et ceci jusqu'à évaporation totale de l'eau.

Le produit solide ainsi récupéré est broyé puis calciné pendant 3 heures à 1100°C.

A l'issue de cette calcination, on récupère une poudre verte dont les caractéristiques sont les suivantes :
- granulométrie moyenne (CILAS) : Φ₅₀ = 3 µm
- coordonnées chromatiques :
   L* = 30,8
   a* = - 10,9
   b* = 5,45

### Exemple 6

Cet exemple illustre l'invention dans le cadre de la synthèse d'un pigment à base de l'oxyde mixte **Y**_{**2**}**Cu**_{**2**}**O**_{**5**}.

On mélange dans un bêcher :
- 70 ml d'une solution de nitrate d'yttrium 2,9 M
- 48,35 g de nitrate de cuivre trihydraté.

Le mélange ainsi obtenu est agité pour homogénéisation puis séché par atomisation (atomiseur Büchi).

On recueille alors une poudre qui est ensuite calcinée pendant 3 heures à 1000°C.

On obtient ainsi une poudre de couleur à dominante verte mais tirant néanmoins sur le bleu, et dont les caractéristiques sont les suivantes :
- granulométrie moyenne (CILAS) : Φ₅₀ = 2,9 µm
- coordonnées chromatiques :
   L* = 43,4
   a* = - 22,5
   b* = - 11,9

### Exemple 7

Cet exemple illustre l'invention dans le cadre de la synthèse d'un pigment à base d'un oxyde mixte de formule globale **Y**_{**2**}**Ba**_{**0,5**}**Cu**_{**1,5**}**O**_{**5**}.

On mélange dans un bêcher :
- 69 ml d'une solution de nitrate d'yttrium 2,9 M
- 36,25 g de nitrate de cuivre trihydraté
- 13,06 g de nitrate de baryum.

On ajoute ensuite de l'eau (dilution) de manière à obtenir 300 ml de mélange.

Le mélange est ensuite chauffé, sous agitation, pour solubiliser parfaitement le nitrate de baryum et obtenir ainsi une solution homogène.

Cette solution est alors séchée par atomisation (atomiseur Büchi).

Une récupère ainsi une poudre qui est ensuite calcinée pendant 3 heures à 950°C.

Après calcination, on obtient une poudre verte dont les caractéristiques sont les suivantes :
- granulométrie moyenne (CILAS) : Φ₅₀ = 2,5 µm
- coordonnées chromatiques :
   L* = 43,3
   a* = - 15,5
   b* = 5,5

### Exemple 8

Cet exemple a pour but d'illustrer l'aptitude des pigments selon l'invention pour la coloration des plastiques.

20 g d'un pigment à base d' **Y**_{**2**}**BaCuO**_{**5**} tel que préparé à l'exemple 2 (Φ₅₀ = 3 µ; L* = 60,4 ; a*= - 39,3 ; b* = 20,9) sont mélangés en cube tournant à 2 kg d'un polypropylène de référence Eltex P HV 001.

Le mélange est ensuite extrudé à 180°C au moyen d'une extrudeuse bivis ZSK 30 (commercialisée par la Société Wermer et Pfeiderer).

Les granulés obtenus sont ensuite injectés à 220°C au moyen d'une presse à injecter Arburg 350-90-220 D avec un cycle de 41 secondes.
Le moule est maintenu à la température de 35°C.

On obtient ainsi une éprouvette parallépipèdique à double épaisseur (2 mm et 4 mm) présentant une largeur de 49 mm et une longueur de 69 mm. Cette éprouvette présente une très belle et régulière couleur verte.

Les coordonnées chromatiques de cette éprouvette, mesurées sur la partie épaisse de cette dernière (4 mm), sont alors les suivantes :
- L* = 45,6
- a* = - 36
- b* = 20,5

## Revendications

1. Utilisation pour la coloration de matériaux, de pigments colorés comprennant au moins un oxyde mixte de formule :
R₂MₓM'_{y}O₅
dans laquelle R représente au moins un élément pris dans le groupe constitué par l'yttrium et les terres rares de numéros atomiques compris inclusivement entre 62 et 71, M et M' représentent des éléments choisis, identiques ou différents, au sein des éléments métalliques présentant au moins un état de valence +2, et x et y sont deux nombres, de préférence entiers, dont la somme x+y est égale à 2, les pigments étant constitués d'agglomérats de taille comprise entre 2 et 25 µm.

2. Utilisation pour la coloration de matériaux, de pigments colorés comprennant au moins un oxyde mixte de formule :
R₂MₓM'_{y}O₅
dans laquelle R représente au moins un élément pris dans le groupe constitué par l'yttrium et les terres rares de numéros atomiques compris inclusivement entre 62 et 71, M et M' représentent des éléments choisis, identiques ou différents, au sein des éléments métalliques présentant au moins un état de valence +2, et x et y sont deux nombres, de préférence entiers, dont la somme x+y est égale à 2, les pigments étant constitués de grains de taille comprise entre 0,2 et 5 µm, ces grains pouvant être issus de la désagglomération d'agglomérats constitués desdits grains.

3. Utilisation selon la revendication 1, pour la coloration de matériaux, de pigments colorés comprennant au moins un oxyde mixte de formule :
R₂MₓM'_{y}O₅
dans laquelle R représente au moins un élément pris dans le groupe constitué par l'yttrium et les terres rares de numéros atomiques compris inclusivement entre 62 et 71, M et M' représentent des éléments choisis, identiques ou différents, au sein des éléments métalliques présentant au moins un état de valence +2, et x et y sont deux nombres, de préférence entiers, dont la somme x+y est égale à 2, les pigments étant constitués d'agglomérats de taille comprise entre 2 et 25 µm, ces agglomérats étant constitués de grains et étant susceptibles d'être désagglomérés en grains de taille comprise entre 0,2 et 5 microns.

4. Utilisation selon l'une des revendications précédentes des pigments dans la coloration des matières plastiques, des peintures, des lasures, des caoutchoucs, des céramiques, des glaçures, des papiers, des encres, des produits cosmétiques, des teintures et des revêtements stratifiés.

5. Utilisation selon l'une des revendications précédentes de pigments pour lesquels lesdits éléments M et M' sont choisis dans le groupe constitué par les éléments alcalino-terreux; le nickel; le cuivre; le zinc; le cobalt et les métaux précieux.

6. Utilisation selon l'une des revendications précédentes de pigments pour lesquels l'élément M est choisi dans le groupe constitué par les éléments alcalino-terreux et M' est le cuivre.

7. Utilisation selon l'une des revendications précédentes de pigments pour lesquels l'élément R est l'yttrium.

8. Utilisation selon l'une des revendications précédentes de pigments comprenant un oxyde mixte répondant à la formule Y₂BaCuO₅.

9. Utilisation selon l'une des revendications 1 à 7 de pigments comprenant un oxyde mixte répondant à la formule Y₂Cu₂O_{5.}

10. Pigments colorés, caractérisés en ce qu'ils comprennent au moins un oxyde mixte de formule :
R₂MₓM'_{y}O₅
dans laquelle R représente au moins un élément pris dans le groupe constitué par l'yttrium et les terres rares de numéros atomiques compris inclusivement entre 62 et 71, M et M' représentent des éléments choisis, identiques ou différents, au sein des éléments métalliques présentant au moins un état de valence +2, et x et y sont deux nombres, de préférence entiers, dont la somme x+y est égale à 2, cet oxyde mixte étant autre que Y₂Cu₂O₅; et en ce qu'ils sont constitués d'agglomérats de taille comprise entre 2 et 25 µm.

11. Pigments colorés, caractérisés en ce qu'ils comprennent au moins un oxyde mixte de formule :
R₂MₓM'_{y}O₅
dans laquelle R représente au moins un élément pris dans le groupe constitué par l'yttrium et les terres rares de numéros atomiques compris inclusivement entre 62 et 71, M et M' représentent des éléments choisis, identiques ou différents, au sein des éléments métalliques présentant au moins un état de valence +2, et x et y sont deux nombres, de préférence entiers, dont la somme x+y est égale à 2, cet oxyde mixte étant autre que Y₂Cu₂O₅; et en ce qu'ils sont constitués de grains de taille comprise entre 0,2 et 5 µm, ces grains pouvant être issus de la désagglomération d'agglomérats constitués desdits grains.

12. Pigments colorés selon la revendication 10, comprennant au moins un oxyde mixte de formule :
R₂MₓM'_{y}O₅
dans laquelle R représente au moins un élément pris dans le groupe constitué par l'yttrium et les terres rares de numéros atomiques compris inclusivement entre 62 et 71, M et M' représentent des éléments choisis, identiques ou différents, au sein des éléments métalliques présentant au moins un état de valence +2, et x et y sont deux nombres, de préférence entiers, dont la somme x+y est égale à 2, cet oxyde mixte étant autre que Y₂Cu₂O₅; les pigments étant constitués d'agglomérats de taille comprise entre 2 et 25 µm, ces agglomérats étant constitués de grains et étant susceptibles d'être désagglomérés en grains de taille comprise entre 0,2 et 5 microns.

13. Pigments selon la revendication 10, 11 ou 12, caractérisés en ce que lesdits éléments M et M' sont choisis dans le groupe constitué par les éléments alcalino-terreux; le nickel; le cuivre; le zinc; le cobalt et les métaux précieux.

14. Pigments selon la revendication 13, caractérisés en ce que lesdits éléments alcalino-terreux sont choisis parmi le magnésium, le calcium, le baryum et le strontium.

15. Pigments selon la revendication 13 ou 14, caractérisés en ce que M est un alcalino-terreux et M' est le cuivre.

16. Pigments selon l'une des revendications 10 à 15, caractérisés en ce que l'élément R est l'yttrium.

17. Pigments selon l'une quelconque des revendications 10 à 16, caractérisés en ce qu'ils comprennent un oxyde mixte répondant à la formule Y₂BaCuO₅.

18. Pigments selon la revendication 17, caractérisés en ce qu'ils présentent des coordonnées chromatiques L et a* suivantes : L au moins égal à 30; a* inférieur ou égal à -20.

19. Pigments selon la revendication 18, caractérisés en ce que L est au moins égal à 40 et plus particulièrement au moins égal à 50.

20. Pigments selon l'une des revendications 17 à 19, caractérisés en ce que a* est inférieur ou égal - 30 et plus particulièrement inférieur ou égal à - 40.

21. Pigments selon l'une des revendications 17 à 20, caractérisés en ce que leur coordonnée chromatique b* est comprise entre 0 et 30 et plus particulièrement entre 10 et 20.

22. Procédé de synthèse de pigments tels que définis à l'une quelconque des revendications 10 à 21, caractérisé en ce qu'il comprend les étapes suivantes :
(i) on prépare un mélange contenant, en solution et dans les proportions stoechiométriques requises, des sels solubles des éléments R, M et M' qui rentrent dans la composition de l'oxyde mixte désiré,
(ii) on sèche le mélange obtenu,
(iii) on calcine le produit séché,
(iv) et enfin, éventuellement, on broie et/ou désagglomère le produit calciné.

23. Procédé selon la revendication 22, caractérisé en ce que ledit mélange est un mélange aqueux.

24. Procédé selon l'une des revendications 22 ou 23, caractérisé en ce que lesdits sels sont choisis dans le groupe constitué par les nitrates, les halogénures, les acétates et les sulfates.

25. Procédé selon l'une des revendications 22 à 24, caractérisé en ce que ledit séchage se fait par atomisation.

26. Procédé selon la revendication 25, caractérisé en ce que ladite atomisation se fait en injectant ledit mélange suivant une trajectoire confondue avec l'axe de symétrie d'un écoulement hélicoïdal et puits-tourbillon de gaz chauds assurant la pulvérisation puis le séchage dudit mélange, le temps de séjour moyen des particules dans le réacteur étant inférieur à 1/10 de seconde environ.

27. Procédé selon l'une quelconque des revendications 22 à 26, caractérisé en ce que ladite calcination est opérée à une température d'au moins 900°C.

28. Procédé selon la revendication 27, caractérisé en ce que ladite température est d'au moins 1000°C.

29. Procédé selon l'une quelconque des revendications 22 à 28, caractérisé en ce que ladite étape de broyage et/ou désagglomération est conduite au moyen d'un broyeur à jet d'air.

30. Compositions de matière colorées notamment du type plastiques, peintures, lasures, caoutchoucs, céramiques, glaçures, papiers, encres, produits cosmétiques, teintures et revêtements stratifiés, caractérisées en ce qu'elles comprennent des pigments colorés tels que définis à l'une quelconque des revendications 10 à 21.

## Claims

1. Use for the colouring of materials of coloured pigments comprising at least one mixed oxide of the formula:
R₂MₓM'_{y}O₅
in which R represents at least one element from the group formed by yttrium and the rare earths of atomic numbers of between 62 and 71 inclusive, M and M' represent identical or different elements selected among the metallic elements having at least a valence state +2, and x and y are two numbers, preferably integers, of which the sum x + y is equal to 2, the pigments being made up of agglomerates of a size of between 2 and 25 µm.

2. Use for the colouring of materials of coloured pigments comprising at least one mixed oxide of the formula:
R₂MₓM'_{y}O₅
in which R represents at least one element from the group formed by yttrium and the rare earths of atomic numbers of between 62 and 71 inclusive, M and M' represent identical or different elements selected among the metallic elements having at least a valence state +2, and x and y are two numbers, preferably integers, of which the sum x + y is equal to 2, the pigments being made up of grains of a size of between 0.2 and 5 µm, which grains can be the result of disagglomeration of agglomerates made up of said grains.

3. Use according to claim 1 for the colouring of materials of coloured pigments comprising at least one mixed oxide of the formula:
R₂MₓM'_{y}O₅
in which R represents at least one element from the group formed by yttrium and the rare earths of atomic numbers of between 62 and 71 inclusive, M and M' represent identical or different elements selected among the metallic elements having at least a valence state +2, and x and y are two numbers, preferably integers, of which the sum x + y is equal to 2, the pigments being made up of agglomerates of a size of between 2 and 25 µm, said agglomerates being made up of grains and being capable of being disagglomerated into grains of a size of between 0.2 and 5 µm.

4. Use according to one of the preceding claims of the pigments in the colouring of plastics materials, paints, glazes, rubbers, ceramics, glazings, papers, inks, cosmetic products, dyes and laminated coatings.

5. Use according to one of the preceding claims of pigments for which said elements M and M' are selected from the group formed by alkaline earth elements; nickel; copper; zinc; cobalt and precious metals.

6. Use according to one of the preceding claims of pigments for which the element M is selected from the group formed by alkaline earth elements and M' is copper.

7. Use according to one of the preceding claims of pigments for which the element R is yttrium.

8. Use according to one of the preceding claims of pigments comprising a mixed oxide corresponding to the formula Y₂BaCuO₅.

9. Use according to one of claims 1 to 7 of pigments comprising a mixed oxide corresponding to the formula Y₂Cu₂O₅.

10. Coloured pigments characterised in that they comprise at least one mixed oxide of the formula:
R₂MₓM'_{y}O₅
in which R represents at least one element from the group formed by yttrium and the rare earths of atomic numbers of between 62 and 71 inclusive, M and M' represent identical or different elements selected among the metallic elements having at least a valence state +2, and x and y are two numbers, preferably integers, of which the sum x + y is equal to 2, said mixed oxide being other than Y₂Cu₂O₅; and that they are made up of agglomerates of a size of between 2 and 25 µm.

11. Coloured pigments characterised in that they comprise at least one mixed oxide of the formula:
R₂MₓM'_{y}O₅
in which R represents at least one element from the group formed by yttrium and the rare earths of atomic numbers of between 62 and 71 inclusive, M and M' represent identical or different elements selected among the metallic elements having at least a valence state +2, and x and y are two numbers, preferably integers, of which the sum x + y is equal to 2, said mixed oxide being other than Y₂Cu₂O₅; and that they are made up of grains of a size of between 0.2 and 5 µm, which grains can be the result of disagglomeration of agglomerates made up of said grains.

12. Coloured pigments according to claim 10 comprising at least one mixed oxide of the formula:
R₂MₓM'_{y}O₅
in which R represents at least one element from the group formed by yttrium and the rare earths of atomic numbers of between 62 and 71 inclusive, M and M' represent identical or different elements selected among the metallic elements having at least a valence state +2, and x and y are two numbers, preferably integers, of which the sum x + y is equal to 2, said mixed oxide being other than Y₂Cu₂O₅; the pigments being made up of agglomerates of a size of between 2 and 25 µm, said agglomerates being made up of grains and being capable of being disagglomerated to form grains of a size of between 0.2 and 5 µm.

13. Pigments according to claim 10, claim 11 or claim 12 characterised in that said elements M and M' are selected from the group formed by alkaline earth elements; nickel; copper; zinc; cobalt and precious metals.

14. Pigments according to claim 13 characterised in that said alkaline earth elements are selected from magnesium, calcium, barium and strontium.

15. Pigments according to claim 13 or claim 14 characterised in that M is an alkaline earth and M' is copper.

16. Pigments according to one of claims 10 to 15 characterised in that the element R is yttrium.

17. Pigments according to any one of claims 10 to 16 characterised in that they comprise a mixed oxide corresponding to the formula Y₂BaCuO₅.

18. Pigments according to claim 17 characterised in that they have following chromatic co-ordinates L and a*: L at least equal to 30; and a* less than or equal to -20.

19. Pigments according to claim 18 characterised in that L is at least equal to 40 and more particularly at least equal to 50.

20. Pigments according to one of claims 17 to 19 characterised in that a* is less than or equal to -30 and more particularly less than or equal to -40.

21. Pigments according to one of claims 17 to 20 characterised in that their chromatic co-ordinate b* is between 0 and 30 and more particularly between 10 and 20.

22. A process for the synthesis of pigments as defined in any one of claims 10 to 21 characterised in that it comprises the following steps:
(i) preparing a mixture containing in solution and in the required stoichiometric proportions soluble salts of the elements R, M and M' which occur in the composition of the desired mixed oxide,
(ii) drying the mixture obtained,
(iii) calcining the dried product, and finally
(iv) possibly crushing and/or disagglomerating the calcined product.

23. A process according to claim 22 characterised in that said mixture is an aqueous mixture.

24. A process according to one of claims 22 and 23 characterised in that said salts are selected from the group formed by nitrates, halides, acetates and sulphates.

25. A process according to one of claims 22 to 24 characterised in that said drying operation is effected by atomisation.

26. A process according to claim 25 characterised in that said atomisation operation is effected by injecting said mixture along a trajectory which is coincident with the axis of symmetry of a helicoidal and well-vortex flow of hot gases for effecting spraying and then drying of said mixture, the mean residence time of the particles in the reactor being less than approximately 1/10th of a second.

27. A process according to any one of claims 22 to 26 characterised in that said calcination operation is effected at a temperature of at least 900°C.

28. A process according to claim 27 characterised in that said temperature is at least 1000°C.

29. A process according to any one of claims 22 to 28 characterised in that said crushing and/or disagglomeration step is effected by means of an air jet crusher.

30. Coloured compositions of material, in particular of the plastics, paints, glazes, rubbers, ceramics, glazings, papers, inks, cosmetic products, dyes and laminated coatings type, characterised in that they comprise coloured pigments as defined in any one of claims 10 to 21.

## Patentansprüche

1. Verwendung von farbigen Pigmenten, umfassend mindestens ein Mischoxid der Formel:
R₂MₓM'_{y}O₅,
in der R für mindestens ein Element aus der Gruppe, gebildet aus Yttrium und den Seltenerdelementen mit den Ordnungszahlen 62 bis 71 einschließlich, steht, M und M' für die gleichen oder verschiedene Elemente stehen, die ausgewählt sind aus den metallischen Elementen, die mindestens eine Wertigkeitsstufe +2 aufweisen, und x und y zwei Zahlen, vorzugsweise ganze Zahlen, sind, deren Summe x + y gleich 2 ist, wobei die Pigmente aus Agglomeraten einer Größe zwischen 2 und 25 µm gebildet werden,
für die Färbung von Materialien.

2. Verwendung von farbigen Pigmenten, umfassend mindestens ein Mischoxid der Formel:
R₂MₓM'_{y}O₅,
in der R für mindestens ein Element aus der Gruppe, gebildet aus Yttrium und den Seltenerdelementen mit den Ordnungszahlen 62 bis 71 einschließlich, steht, M und M' für die gleichen oder verschiedene Elemente stehen, die ausgewählt sind aus den metallischen Elementen, die mindestens eine Wertigkeitsstufe +2 aufweisen, und x und y zwei Zahlen, vorzugsweise ganze Zahlen, sind, deren Summe x + y gleich 2 ist, wobei die Pigmente aus Körnchen einer Größe zwischen 0,2 und 5 µm gebildet werden und diese Körnchen aus der Desagglomeration von aus diesen Körnchen gebildeten Agglomeraten stammen können,
für die Färbung von Materialien.

3. Verwendung nach Anspruch 1 von farbigen Pigmenten, umfassend mindestens ein Mischoxid der Formel:
R₂MₓM'_{y}O₅,
in der R für mindestens ein Element aus der Gruppe, gebildet aus Yttrium und den Seltenerdelementen mit den Ordnungszahlen 62 bis 71 einschließlich, steht, M und M' für die gleichen oder verschiedene Elemente stehen, die ausgewählt sind aus den metallischen Elementen, die mindestens eine Wertigkeitsstufe +2 aufweisen, und x und y zwei Zahlen, vorzugsweise ganze Zahlen, sind, deren Summe x + y gleich 2 ist, wobei die Pigmente aus Agglomeraten einer Größe zwischen 2 und 25 µm gebildet werden, diese Agglomerate aus Körnchen gebildet werden und zu Körnchen einer Größe zwischen 0,2 und 5 µm desagglomeriert werden können,
für die Färbung von Materialien.

4. Verwendung der Pigmente nach einem der vorangegangenen Ansprüche bei der Färbung von Kunststoffmaterialien, Anstrichmitteln, Lasuren, Kautschuken, Keramiken, Glasuren, Papieren, Tinten, kosmetischen Erzeugnissen, Beizen und Schichtbelägen.

5. Verwendung nach einem der vorangegangenen Ansprüche von Pigmenten, bei denen die Elemente M und M' ausgewählt sind aus der Gruppe, gebildet aus den Erdalkalimetallelementen, Nickel, Kupfer, Zink, Kobalt und den Edelmetallen.

6. Verwendung nach einem der vorangehenden Ansprüche von Pigmenten, bei denen das Element M ausgewählt ist aus der von den Erdalkalielementen gebildeten Gruppe und M' Kupfer ist.

7. Verwendung nach einem der vorangegangenen Ansprüche von Pigmenten, bei denen das Element R Yttrium ist.

8. Verwendung nach einem der vorangegangenen Ansprüche von Pigmenten, die ein der Formel Y₂BaCuO₅ entsprechendes Mischoxid umfassen.

9. Verwendung nach einem der Ansprüche 1 bis 7 von Pigmenten, die ein der Formel Y₂Cu₂O₅ entsprechendes Mischoxid umfassen.

10. Farbige Pigmente, dadurch gekennzeichnet, daß sie mindestens ein Mischoxid der Formel:
R₂MₓM'_{y}O₅
umfassen, in welcher Formel R für mindestens ein Element aus der Gruppe, gebildet aus Yttrium und den Seltenerdelementen mit den Ordnungszahlen 62 bis 71 einschließlich, steht, M und M' für die gleichen oder verschiedene Elemente stehen, die ausgewählt sind aus den metallischen Elementen, die mindestens eine Wertigkeitsstufe +2 aufweisen, und x und y zwei Zahlen, vorzugsweise ganze Zahlen, sind, deren Summe x + y gleich 2 ist, wobei dieses Mischoxid ein anderes als Y₂Cu₂O₅ ist, und daß die Pigmente aus Agglomeraten einer Größe zwischen 2 und 25 µm gebildet werden.

11. Farbige Pigmente, dadurch gekennzeichnet, daß sie mindestens ein Mischoxid der Formel:
R₂MₓM'_{y}O₅
umfassen, in welcher Formel R für mindestens ein Element aus der Gruppe, gebildet aus Yttrium und den Seltenerdelementen mit den Ordnungszahlen 62 bis 71 einschließlich, steht, M und M' für die gleichen oder verschiedene Elemente stehen, die ausgewählt sind aus den metallischen Elementen, die mindestens eine Wertigkeitsstufe +2 aufweisen, und x und y zwei Zahlen, vorzugsweise ganze Zahlen, sind, deren Summe x + y gleich 2 ist, wobei dieses Mischoxid ein anderes als Y₂Cu₂O₅ ist, und daß die Pigmente aus Körnchen einer Größe zwischen 0,2 und 5 µm gebildet werden, wobei diese Körnchen aus der Desagglomeration von aus diesen Körnchen gebildeten Agglomeraten stammen können.

12. Farbige Pigmente nach Anspruch 10, umfassend mindestens ein Mischoxid der Formel:
R₂MₓM'_{y}O₅,
in der R für mindestens ein Element aus der Gruppe, gebildet aus Yttrium und den Seltenerdelementen mit den Ordnungszahlen 62 bis 71 einschließlich, steht, M und M' für die gleichen oder verschiedene Elemente stehen, die ausgewählt sind aus den metallischen Elementen, die mindestens eine Wertigkeitsstufe +2 aufweisen, und x und y zwei Zahlen, vorzugsweise ganze Zahlen, sind, deren Summe x + y gleich 2 ist, wobei dieses Mischoxid ein anderes als Y₂Cu₂O₅ ist und die Pigmente aus Agglomeraten einer Größe zwischen 2 und 25 µm gebildet werden, diese Agglomerate aus Körnchen gebildet werden und zu Körnchen einer Größe zwischen 0,2 und 5 µm desagglomeriert werden können.

13. Pigmente nach Anspruch 10, 11 oder 12, dadurch gekennzeichnet, daß die Elemente M und M' ausgewählt sind aus der Gruppe, gebildet aus den Erdalkalimetallelementen, Nickel, Kupfer, Zink, Kobalt und den Edelmetallen.

14. Pigmente nach Anspruch 13, dadurch gekennzeichnet, daß die Erdalkalielemente ausgewählt sind aus Magnesium, Calcium, Barium und Strontium.

15. Pigmente nach Anspruch 13 oder 14, dadurch gekennzeichnet, daß M ein Erdalkalielement ist und M' Kupfer ist.

16. Pigmente nach einem der Ansprüche 10 bis 15, dadurch gekennzeichnet, daß das Element R Yttrium ist.

17. Pigmente nach einem der Ansprüche 10 bis 16, dadurch gekennzeichnet, daß sie ein der Formel Y₂BaCuO₅ entsprechendes Mischoxid umfassen.

18. Pigmente nach Anspruch 17, dadurch gekennzeichnet, daß sie folgende Farbwertkoordinaten L und a* aufweisen: L ist mindestens gleich 30, a* ist weniger als oder gleich -20.

19. Pigmente nach Anspruch 18, dadurch gekennzeichnet, daß L mindestens gleich 40 und insbesondere mindestens gleich 50 ist.

20. Pigmente nach einem der Ansprüche 17 bis 19, dadurch gekennzeichnet, daß a* weniger als oder gleich -30 und insbesondere weniger als oder gleich -40 ist.

21. Pigmente nach einem der Ansprüche 17 bis 20, dadurch gekennzeichnet, daß deren Farbwertkoordinate b* zwischen 0 und 30 und insbesondere zwischen 10 und 20 liegt.

22. Verfahren zur Herstellung von Pigmenten, wie sie in einem der Ansprüche 10 bis 21 definiert sind, dadurch gekennzeichnet, daß es die folgenden Stufen umfaßt:
(i) man stellt eine Mischung her, die in Lösung und in den erforderlichen stöchiometrischen Anteilen lösliche Salze der Elemente R, M und M', die in der Zusammensetzung des gewünschten Mischoxids enthalten sind, enthält,
(ii) man trocknet die erhaltene Mischung,
(iii) man kalziniert das getrocknete Produkt,
(iv) und gegebenenfalls zerkleinert und/oder desagglomeriert man schließlich das kalzinierte Produkt.

23. Verfahren nach Anspruch 22, dadurch gekennzeichnet, daß die Mischung eine wäßrige Mischung ist.

24. Verfahren nach einem der Ansprüche 22 oder 23, dadurch gekennzeichnet, daß die Salze ausgewählt werden aus der Gruppe, gebildet aus den Nitraten, Halogeniden, Acetaten und Sulfaten.

25. Verfahren nach einem der Ansprüche 22 bis 24, dadurch gekennzeichnet, daß die Trocknung durch Zerstäubung erfolgt.

26. Verfahren nach Anspruch 25, dadurch gekennzeichnet, daß die Zerstäubung erfolgt, indem man die Mischung einer mit der Symmetrieachse einer schraubenförmigen Strömung zusammenfallenden Bahn folgend einspritzt und ein Kolk- oder Schachtwirbel heißer Gase die Zerstäubung und nachfolgend die Trocknung der Mischung sicherstellt, wobei die mittlere Verweilzeit der Teilchen in dem Reaktor unter etwa 1/10 s beträgt.

27. Verfahren nach einem der Ansprüche 22 bis 26, dadurch gekennzeichnet, daß die Kalzinierung bei einer Temperatur von mindestens 900°C ausgeführt wird.

28. Verfahren nach Anspruch 27, dadurch gekennzeichnet, daß die Temperatur mindestens 1000°C beträgt.

29. Verfahren nach einem der Ansprüche 22 bis 28, dadurch gekennzeichnet, daß der Zerkleinerungs- und/oder Desagglomerationsschritt mittels einer Luftstrahlmühle ausgeführt wird.

30. Gefärbte Stoffzusammensetzungen insbesondere vom Typ Kunststoffe, Anstrichmittel, Lasuren, Kautschuke, Keramiken, Glasuren, Papiere, Tinten, kosmetische Erzeugnisse, Beizen und Schichtbeläge, dadurch gekennzeichnet, daß sie farbige Pigmente, wie sie in einem der Ansprüche 10 bis 21 definiert sind, umfassen.
